# NEW EUROPEAN PATENT SPECIFICATION

(11) **EP 1 078 109 B2**
(45) Date of publication and mention of the opposition decision: **13.09.2006**
(45) Mention of the grant of the patent: 22.01.2003
(21) Application number: 99907554.2
(22) Date of filing: 18.02.1999
(51) Int. Cl.: C22C 21/06, B23K 35/28

(54) **FORMABLE, HIGH STRENGTH ALUMINIUM-MAGNESIUM ALLOY MATERIAL FOR APPLICATION IN WELDED STRUCTURES**
VERFORMBARE, HOCHFESTE ALUMNINIUM-MAGNESIUM-LEGIERUNG FÜR SCHWEISSTRUKTUREN
ALLIAGE D'ALUMINIUM ET DE MAGNESIUM EXTREMEMENT RESISTANT POUVANT ETRE FA ONNE ET MIS EN APPLICATION DANS DES STRUCTURES SOUDEES

(30) Priority: 20.02.1998 EP 98200560
(43) Date of publication of application: 28.02.2001
(73) Proprietor: Corus Aluminium Walzprodukte GmbH, 56070 Koblenz (DE); Corus Aluminium N.V., 2570 Duffel (BE)
(72) Inventor: HASZLER, Alfred, Johann, Peter, D-56179 Vallendar (DE); SAMPATH, Desikan, NL-1946 RH Beverwijk (NL); BAEKELANDT, Jean Pierre Jules, 2500 Lier/Koningshooikt (BE); VAN DER HOEVEN, Job Anthonius, 2011 NM Haarlem (NL)
(74) Representative: Hansen, Willem Joseph Maria
(86) International application number: PCT/EP1999/001011
(87) International publication number: WO 1999/042627

(56) References cited:
- EP-A- 0 799 900
- WO-A-96/26299
- DE-A- 2 652 960
- FR-A- 2 370 105
- GB-A- 1 387 961
- GB-A- 2 000 806
- PATENT ABSTRACTS OF JAPAN vol. 013, no. 260 (C-607), 15 June 1989 -& JP 01 062433 A (KOBE STEEL LTD), 8 March 1989 cited in the application
- PATENT ABSTRACTS OF JAPAN vol. 010, no. 148 (C-350), 29 May 1986 -& JP 61 006244 A (SUMITOMO KEIKINZOKU KOGYO KK), 11 January 1986 cited in the application
- PATENT ABSTRACTS OF JAPAN vol. 010, no. 280 (C-374), 24 September 1986 -& JP 61 099654 A (FURUKAWA ALUM CO LTD), 17 May 1986 cited in the application

## Description

### FIELD OF THE INVENTION

The present invention relates to an aluminium-magnesium alloy with a Mg content of up to 4.5 wt. %, in the form of rolled products and extrusions, which are particularly suitable to be used in the form of sheets, plates or extrusions in the construction of welded or joined structures such as storage containers, pressure vessels and vessels for land and marine transportation. Rolled products may have a thickness in the range of a few mm, e.g., up to 200 mm. Extrusions of the alloy of this invention can be used for example in tubes for welded marine structures, and weld filler wire can be manufactured from the alloy of his invention.

### DESCRIPTION OF THE RELATED ART

Aluminium-magnesium alloys with Mg levels in the range of 2.0 to 5.0 wt. % are extensively used in welded constructions such as storage containers, pressure vessels and vessels for land and marine transportation. A standard alloy of this type is the AA5083 alloy having the nominal composition, in wt. %:

| | |
|---|---|
| Mg | 4.0 - 4.9 |
| Mn | ≤ 0.50 |
| Cr | 0.05 - 0.25 |
| Ti | ≤ 0.15 |
| Fe | ≤ 0.4 |
| Si | ≤ 0.40 |
| Zn | ≤ 0.25 |
| Cu | ≤ 0.1 |
| others | (each) ≤ 0.05 |
| | (total) ≤ 0.15 |
| balance | Al |

In particular, AA5083 alloy in the soft temper is used in the construction of tanker lorries, dump lorries, etc. The main reason for the versatility of the AA5083 alloy is that it provides good combinations of high strength (both at ambient and cryogenic temperatures), light weight, corrosion resistance, formability and weldability. However, the use of this alloy is limited to applications which require service temperatures below 80°C. In case the intended application of the alloy requires both exposure to temperatures above 80°C, as compared to standard AA5083, then aluminium alloys with lower Mg levels, such as AA5454, are selected. The standard alloy AA5454 has the nominal composition, in wt. %:

| | |
|---|---|
| Mg | 2.4 - 3-0 |
| Mn | 0.5 - 1.0 |
| Cr | 0.05 - 0.20 |
| Ti | ≤ 0.20 |
| Fe | ≤ 0.40 |
| Si | ≤ 0.25 |
| Zn | ≤ 0.25 |
| Cu | ≤ 0.1 |
| others | (each) ≤ 0.05 |
| | (total) ≤ 0.15 |
| balance | Al |

Unfortunately, the achievable strength before and after welding is less than that of the AA5083 alloy.

Some other disclosures of Al-Mg alloys found in the prior art literature will be mentioned below.

EP-A-0799900 discloses a high strength aluminium magnesium material for large welded structures with the following composition, in wt. %:

| | |
|---|---|
| Mg | 4.5 - 7, and preferably 5.2 - 5.6 |
| Mn | 0.4 - 1.2 |
| Zn | 0.4 - 5 |
| Zr | 0.3 max. |
| Cr | 0.3 max. |
| Ti | 0.2 max. |
| Fe | 0.5 max. |
| Si | 0.5 max. |
| Cu | 0.4 max. |
| remainder Al and inevitable impurities. | |

The object is to provide plate material with substantially improved strength in both soft and work hardened temperas as compared to those of the standard AA5083 alloy.

JP-A-01 062433 disclosures an aluminium alloy capable of thin-wall thickness extrusion, containing a lower amount of Mg. The composition is, in wt. %:

| | | | |
|---|---|---|---|
| Mg | 1.0 - 3.0 | | |
| Mn | 0.2 - 0.8 | | |
| Zr | 0.05 - 0.25 | | |
| and containing one or more, selected from: | | Cr | 0.05 - 0.25 |
| | | Zn | 0.3 - 1.0 |
| | | Ti | 0.005 - 0.1 |
| balance | Al. | | |

The disclosed aluminium alloy has improved extrusion characteristics as compared to AA5083.

GB-A-2000806 proposes an filler metal for welding AlZnMg alloys. This document discloses several alloy compositions, for example, in wt. %:

| | |
|---|---|
| Zn | 1.0 - 4.0 |
| Mg | 2.0 - 5.0 |
| Cu | 0.2 - 0.5 |
| Mn | 0.3 - 0.5 |
| Ti | 0.05 - 0.2 |
| Cr | 0.05 - 0.4 |
| Zr | 0.05 - 0.2 |
| Si | 0.3 max. |
| Fe | 0.4 max. |
| balance aluminium. | |

The disclosed filler metal includes a copper addition which is said to suppress weld boundary corrosion.

FR-A-2370105 discloses a method for the production of aluminium plate having higher Zn and lower Mn contents, with good mechanical properties and a good corrosion resistance. The aluminium plate has the following chemical composition, in wt. %:

| | |
|---|---|
| Mg | 3.5 - 5.0 |
| Zn | 1.5 - 3.0 |
| Mn | 0.4 max. |
| Zr | 0.3 max. |
| Cu | 0.3 max. |
| Cr | 0.15 max. |
| Si | 0.35 max. |
| Fe | 0.4 max. |
| balance aluminium and impurities. | |

DE-A-2652960 discloses a method for the production of aluminium plate having higher Zn-content, with good mechanical properties and a good corrosion resistance. The aluminium plate has the following chemical composition, in wt. %:

| | |
|---|---|
| Mg | 3.5 - 5.0 |
| Zn | 1.5 - 3.0 |
| Mn | 0.6 max., preferably 0.4 max., and most preferably 0.05 max. |
| Zr | 0.3 max. |
| Cu | 0.3 max. |
| Cr | 0.35 max., preferably 0.04 max. |
| Si | 0.35 max. |
| Fe | 0.4 max. |
| balance aluminium and impurities. | |

JP-A-61 006244 discloses a high strength aluminium alloy having a very high Zn-content and lower Mn contents, and a method for its manufacture. The aluminium alloy has the following chemical composition, in wt. %:

| | | | |
|---|---|---|---|
| Mg | 3.5 - 5.0 | | |
| Zn | 2.1-3.5 | | |
| Cu | 0.05- 0.6 | | |
| 0.5 - 0.6 optionally, one or more of: | | Mn | 0.05-0.4 |
| | | Cr | 0.05 - 0.25 |
| | | Zr | 0.05 - 0.25 |
| | | V | 0.05 - 0.25 |
| balance aluminium and impurities. | | | |

JP-A-61 099654 discloses an aluminium alloy, having a lower Mg content, for a connector having improved corrosion resistance, strength and brazability of the joint of a bolt hole extrusion. The aluminium alloy comprises, in wt. %:

| | |
|---|---|
| Mg | 1.0-3.0 |
| Zn | 1.0-3.0 |
| Mn | 0.5-1.5 |
| Cr | 0.3 max. |
| Zr | 0.3 max. |
| balance aluminium and impurities. | |

### SUMMARY OF THE INVENTION

An object of the present invention is to provide an aluminium-magnesium alloy rolled product or extrusion with substantially improved strength before and in the welded condition and having a formability at least equivalent to the standard AA5454 alloy.

According to the invention there is provided an aluminium-magnesium alloy in the form of a rolled product or an extrusion, having the following composition in weight percent:

| | |
|---|---|
| Mg | >3.0 - 4.5 |
| Mn | 0.4 - 1.2 |
| Zn | 0.4 - 0.9 |
| Zr | 0.05 - 0.25 |
| Cr | 0.3 max. |
| Ti | 0.2 max. |
| V | 0.2 max. |
| Li | 0.5 max. |
| Sc | 0.5 max. |
| Fe | 0.5 max. |
| Si | 0.5 max. |
| Cu | 0.15 max. |
| Ag | 0.4 max. |
| balance Al and inevitable impurities and provisos as taught in claim 1. | |

By the invention we can provide alloy plate or extrusion having higher strength than AA5454, and particularly the welded joints of the present alloy can have higher strength than the standard AA5454 welds. Alloys of present invention have also been found with improved long term stress and exfoliation corrosion resistance at temperatures above 80°C, which is the maximum temperature of use for the AA5083 alloy. Rolled products of the alloy in accordance with the invention have a formability at least equivalent to those of the standard AA5454 alloy.

The invention also consists in a welded or joint structure having at least one welded plate or extrusion of the alloy set out above. Preferably the proof strength of the weld is at least 110 MPa, and more preferably at least 120 MPa, and most preferably at least 125 MPa.

The invention also consists in the use of the alloy of the invention as weld filler wire, and is preferably provided in the form of drawn wire. The wire may be produced, for example, by extruding the alloy through a multiple hole die. The extruded rod may then be drawn into wire using multiple drawing steps. The wire may also be produced by continuously casting the alloy in form, for example, of a round bar. The bars may either directly coiled or after a rolling step, and then subsequently drawn to produce weld filler wire.

It is believed that the improved properties available with the invention, particulary higher strength levels in work-hardened, soft tempers and in aged tempers, result from Mg, Mn and Zr levels in the given ranges.

Further it is believed that the Fe and Mn levels in the given range contribute to the good formability of the alloy, in particular good results are obtained where the Fe/Mn ratio is in the range 0.6 to 1.0.

In addition, by selecting the Mg and Zn at appropriate levels in the given range contribute to the strength of the welds, by allowing a natural ageing effect in the heat affected zone of the weldaments. In particular good results for higher higher strength after welding are obtained where the Mg/Zn ratio is in the range 2 to 8.

The rolled products of the alloy of invention can be manufactured by preheating, hot rolling, optionally cold rolling with or without interannealing, and final annealing/ageing of an Al-Mg alloy ingot of the selected composition. The conditions are preferably that the temperature for preheat is in the range 300 to 530°C. The optional homogenisation prior to hot-rolling is in the range 350 to 580°C for a time of not more than 24 hours. An optional 20 to 90 % cold rolling of the hot rolled plate with or without interannealing is applied. The final annealing and ageing and intermediate annealing is preferably at temperatures in the range 80 to 550°C and soak period at the annealing temperature in the range 2 min to 10 hours. Water quenching or air cooling of the plates following the intermediate and/or final annealing is also applied. The annealing may be carried out after the hot rolling step and the final plate may be stretched by a maximum of 10 %.

The reasons for the limitations of the alloying elements and the processing conditions of the aluminium alloy according to the present invention are described below.
All composition percentages are by weight.

Mg : Mg is the primary strengthening element in the alloy. Mg levels below 3.0 % do not provide the required weld strength and when the addition exceeds 5.0 %, the manufacturing of the alloy is difficult. The preferred Mg level is in the range of >3.0 to 4.5 %, and more preferably in the range of 3.5 to 4.5 %, and most preferably in the range of 3.7 to 4.5 %.

Mn : Mn is an essential additive element. In combination with Mg, Mn provides the strength in both the rolled product and the welded joints of the alloy. Mn levels below 0.4 % cannot provide sufficient strength to the welded joints of the alloy. Above 1.2 % the casting becomes more difficult. The preferred range for Mn is 0.4 to 0.75 %, and more preferably 0.5 to 0.75 %, which represents a compromise between strength and ease of fabrication.

The Fe and Mn levels are to be selected such that the Fe/Mn ratio falls within the range 0.3 to 1.0, which enables the formation of more globular Fe and Mn containing dispersoids in the material of the present invention by which good formability is achieved. A more preferred Fe/Mn ratio is in the range of 0.3 to 0.7.

Zn : Zn is an important additive for corrosion resistance of the alloy. Below 0.4 %, the Zn addition does not provide as much intergranular corrosion resistance as to that of AA5454. At Zn levels above 0.9 %, the corrosion resistance decreases due to long term non-uniform alteration effect of Mg containing precipitation. For this reason the maximum level of Zn is 0.9%. The Zn levels are to be chosen such that the Mg/Zn ratio is in a range of 2 to 8 which is required to achieve sufficient natural ageing in the heat affected zone of a weldement and further to balance the microstructure for the optimum corrosion resistance.

Zr : Zr is important for achieving a fine grain refined structure in the fusion zone of welded joints using the alloy of the invention. Zr levels above 0.25 % tend to result in very coarse needle-shaped primary particles which decrease ease of fabrication of the alloys and formability of the alloy rolled products or extrusions, and therefore the Zr level must be not more than 0.25 %. The minimum level of Zr is 0.05 % and to provide sufficient grain refinement a preferred Zr range of 0.10 to 0.20 % is employed.

Cr : Cr improves the corrosion resistance of the alloy. However, Cr limits the solubility of Mn and Zr. Therefore, to avoid formation of coarse primaries, the Cr level must be not more than 0.3 %. A preferred range for Cr is up to 0.15 %.

Ti : Ti is important as a grain refiner during solidification of both ingots and welded joints produced using the alloy of the invention. However, Ti in combination with Zr forms undesirable coarse primaries. To avoid this, Ti levels must be not more than 0.2 % and the preferred range for Ti is not more than 0.1 %. A suitable minimum level for Ti is 0.05 %. The Ti may be replaced in part or in whole by V in the same compositional range.

Li : Li may optionally be included in the alloy up to a maximum of 0.5 %, preferably at least 0.05 %. The added Li either forms intermetallics with Mg or promotes the precipitation of Mg containing intermetallics within the grains. Either way the Li addition will assist to improve the corrosion resistance.

Sc: Sc may optionally be included in the alloy up to a maximum of 0.5 %, and preferably at least 0.05 %, to improve the stress and intergranular corrosion resistance by the formation of either Al₃Sc or Mg and Sc containing precipitaes.

Fe : Fe forms Al-Fe-Mn compounds during casting, thereby limiting the beneficial effects due to Mn. Fe levels above 0.5 % causes formation of coarse primary particles which decrease the fatigue life of the welded joints of the alloy of the invention. The preferred range for Fe is 0.15 to 0.35 %, more preferably 0.20 to 0.30 %.

Si : Si also combines with Fe to form coarse Al-Fe-Si phase particles which can affect the fatigue life of the welded joints of the alloy. To avoid the loss in primary strengthening element Mg due to the formation of Mg₂Si, the Si level must be not more than 0.5 %. The preferred range for Si is 0.07 to 0.25 %, more preferably 0.10 to 0.20 %.

Cu : Cu should be not more than 0.15 %. Cu levels above 0.15 % give rise to unacceptable deterioration in pitting corrosion resistance of the alloy rolled products of the invention. The preferred level for Cu is not more than 0.1 %.

Ag : Ag may optionally be included in the alloy up to a maximum of 0.4 %, preferably at least 0.05 %, to improve further the stress corrosion resistance.

The balance is aluminium and inevitably impurities. Typically each impurity element is present at 0.05 % maximum and the total of impurities is 0.15 % maximum.

Methods of making the product of the invention will now be described.

The preheating prior to hot rolling is usually carried out at a temperature in the range 300 to 530°C. The optional homogenisation treatment prior to preheating is usually carried out at a temperature in the range 350 to 580°C in single or in multiple steps. In either case, homogenisation decreases the segregation of alloying elements in the material as cast. In multiple steps, Zr, Cr and Mn can be intentionally precipitated out to control the microstructures of the hot mill exit material. If the treatment is carried out below 350°C, the resultant homogenisation effect is inadequate. If the temperature is above 580°C, eutectic melting might occur resulting in undesirable pore formation. The preferred time of the homogenisation treatment is between 1 and 24 hours.

Using a strictly controlled hot rolling process, it is possible to eliminate cold rolling and/or annealing steps in the process route for the plates.

A 20 to 90 % cold rolling reduction may be applied to hot rolled plate or sheet prior to final annealing. Cold rolling reductions such as 90 % might require intermediate annealing treatment to avoid cracking during rolling. Final annealing or ageing can be carried out in cycles comprising of single or with multiple steps in either case, during heat-up and/or hold and/or cooling down from the annealing temperature. The heat-up period is preferably in the range of 2 min to 15 hours. The annealing temperature is in the range 80 to 550°C depending upon the temper. A temperature range of 200 to 480°C is preferred to produce the soft tempers. The soak period at the annealing temperature is preferably in the range of 10 min to 10 hours. If applied, the conditions of intermediate annealing can be similar to those of the final annealing. Furthermore, the materials that exit the annealing furnace can be either water quenched or air cooled. The conditions of the intermediate annealing are similar to those of the final annealing. Stretching or levelling in the range 0.5 to 10 % may be applied to the final plate.

### EXAMPLE

On a laboratory scale of testing seven alloy have been cast, see Table 1. Alloys 1 to 3 are comparative examples, of which alloy 1 is within the AA5454 range and alloy 3 within the AA5083 range. Alloys 4 to 7 are all examples of the alloy in accordance with this invention.

The cast ingots have been homogenised for 14 hours at 510°C, then hot rolled from 80mm down to 3mm. Then cold rolled from 3 to 2mm and interannealed, and subsequently cold rolled down the final gauge of 1.2mm. The cold rolled sheets have been final annealed for 1 hour at 350°C, using a heat-up and cool down rate of 30°C/h.

The materials obtained have been tested at room temperature of its mechanical properties in both the L- and TL-direction, see Table 2. It is known that within experimental errors the tensile test results of O-temper samples are indicative equivalent of strength in welded condition. Additionally the materials have been tested for their corrosion behaviour. For the weight loss test in accordance with ASTM G67 the material has been both tested without sensitizing and with sensitizing. ASTM G67 has been used to assess the resistance of the alloys to intergranular corrosion. Further material has been sensitized for 24 hours at 150°C. The results are listed in Table 3. The corrosion resistance for pitting and exfoliation in the welded condition has been tested using the ASSET test in accordance with ASTM G66. The results are listed in Table 4, and where PA and PB stands for slight pitting and moderate pitting respectively.

From the results of Table 2 it can be seen that the alloy in accordance with the invention has mechanical properties above those of AA5454 and comparable to AA5083 alloy. A comparison of uniform elongation values of the alloys indicate that the ductility of the alloys are approximately the same suggesting that the formability of the alloys of the invention are equivalent to AA5454. Further from the results of Table 3 and 4 it can be seen that the alloy in accordance with the invention and the reference alloy AA5454 have weight loss values less than 15mg/cm², both before and after sensitisation at 150°C for 25 hours. Therefore according to the ASTM G67 specification, these materials can be considered as resistant to inter-granular corrosion. However, the alloy 3 (AA5083) has a weight loss value of 22 mg/cm² in the sensitised condition and therefore susceptible to intergranular corrosion. Because the alloys in accordance with the invention have an improved corrosion resistance as compared to AA5083, they may be used in applications at service temperatures above 80°C, and typically around 100°C.

**Table 1.**

| **Alloy** | **Inv.** | **Alloying element (in wt.%)** | | | | | | | | |
|---|---|---|---|---|---|---|---|---|---|---|
| | | **Mg** | **Mn** | **Zn** | **Cu** | **Zr** | **Fe** | **Si** | **Cr** | **Ti** |
| 1 | No | 2.6 | 0.75 | 0.02 | 0.05 | - | 0.31 | 0.15 | 0.10 | 0.02 |
| 2 | No | 3.4 | 0.51 | 0.02 | 0.05 | - | 0.31 | 0.14 | 0.15 | 0.02 |
| 3 | No | 4.3 | 0.51 | 0.02 | 0.05 | - | 0.31 | 0.14 | 0.10 | 0.02 |
| 4 | Yes | 4.0 | 0.73 | 0.78 | 0.05 | 0.13 | 0.31 | 0.14 | 0.05 | 0.02 |
| 5 | Yes | 3.9 | 0.74 | 0.53 | 0.05 | 0.13 | 0.31 | 0.14 | 0.05 | 0.02 |
| 6 | Yes | 4.0 | 0.73 | 0.78 | 0.05 | 0.10 | 0.32 | 0.14 | 0.10 | 0.02 |
| 7 | Yes | 4.0 | 0.73 | 0.78 | 0.05 | 0.15 | 0.32 | 0.14 | 0.05 | 0.02 |

**Table 2.**

| **Alloy** | **L-direction** | | | **LT-direction** | | |
|---|---|---|---|---|---|---|
| | **0.2PS [MPa]** | **UTS [MPa]** | **Ag [%]** | **0.2PS [MPa]** | **UTS [MPa]** | **Ag [%]** |
| **1** | 98 | 237 | 17 | 98 | 228 | 14 |
| **2** | 121 | 264 | 16 | 114 | 255 | 17 |
| **3** | 136 | 293 | 17 | 131 | 285 | 18 |
| **4** | 127 | 290 | 17 | 123 | 281 | 14 |
| **5** | 139 | 292 | 19 | 131 | 284 | 21 |
| **6** | 131 | 294 | 19 | 129 | 288 | 15 |
| **7** | 138 | 294 | 16 | 140 | 294 | 14 |

**Table 3.**

| **Alloy** | **Without sensitizing** | **sensitized 24h/150°C** |
|---|---|---|
| | **weight loss [mg/cm**^{**2**}**]** | **weight loss [mg/cm**^{**2**}**]** |
| **1** | 1 | 1 |
| **2** | 1 | 2.5 |
| **3** | 3 | 22 |
| **4** | 2 | 3 |
| **5** | 2 | 5.5 |
| **6** | 2 | 3 |
| **7** | 2 | 2.5 |

**Table 4.**

| **Alloy** | **ASSET test result** |
|---|---|
| **1** | PA/PB + blisters |
| **2** | PA/PB + blisters |
| **3** | PB + blisters |
| **4** | PB |
| **5** | PB |
| **6** | PB |
| **7** | PB |

## Claims

1. Aluminium-magnesium alloy in the form of a rolled product or an extrusion, having the following composition in weight percent.
| | |
|---|---|
| Mg | >3.0 - 4.5 |
| Mn | 0.4 - 1.2 |
| Zn | 0.4 - 0.9 |
| Zr | 0.05 - 0.25 |
| Cr | 0.3 max. |
| Ti | 0.2 max. |
| V | 0.2 max. |
| Li | 0.5 max. |
| Sc | 0.5 max. |
| Fe | 0.5 max. |
| Si | 0.5 max. |
| Cu | 0.15 max. |
| Ag | 0.4 max., |
and with the proviso that Fe/Mn ratio is in the range of 0.3 to 1.0, and
that Mg/Zn ratio is in the range of 2 to 8,
others (each) max. 0.05, (total) max. 0.15,
balance aluminium.

2. Aluminium-magnesium alloy according to claim 1 having a temper selected from a soft temper, a work-hardened temper, a natural aged temper and an artificial aged temper.

3. Aluminium-magnesium alloy according to any one of claims 1 to 2, wherein the Mg content is in the range 3.5 to 4.5 wt %.

4. Aluminium-magnesium alloy according to any one of claims 1 to 3, wherein the Cu content is in the range of 0.1 wt % max.

5. Aluminium-magnesium alloy according to any one of claims 1 to 4, wherein the Mn content is in the range of 0.4 to 0.75 %.

6. Welded structure comprising at least one welded plate or extrusion made of aluminium-magnesium alloy according to any one of claims 1 to 5.

7. Welded structure according to claim 6 wherein the proof strength of the weld of said plate or extrusion is at least 110 MPa.

8. Joint structure comprising at least one plate or extrusion made of aluminium-magnesium alloy according to any one of claims 1 to 5.

9. Use of an aluminium-magnesium alloy according to any one of claims 1 to 8 at an operating temperature greater than 80°C.

10. Use of an aluminium-magnesium alloy according to any one of claims 1 to 5 as a weld filler alloy.

## Patentansprüche

1. Aluminium-Magnesium-Legierung in Form eines gewalzten oder extrudierten (stranggepressten) Erzeugnisses mit folgender Zusammensetzung in Gewichts-%:
| | |
|---|---|
| Mg | > 3,0 - 4,5 |
| Mn | 0,4 - 1,2 |
| Zn | 0,4 - 0,9 |
| Zr | 0,05 - 0,25 |
| Cr | 0,3 max. |
| Ti | 0,2 max. |
| V | 0,2 max. |
| Li | 0,5 max. |
| Sc | 0,5 max. |
| Fe | 0,5 max. |
| Si | 0,5 max. |
| Cu | 0,15 max. |
| Ag | 0,4 max. |
mit einem Verhältnis von Fe/Mn im Bereich von 0,3 - 1,0 und von Mg/Zn im Bereich von 2 - 8
andere einzeln max. 0,05
insg. Max. 0,15
Rest Aluminium

2. Legierung nach Anspruch 1 mit einer Härtestufe (temper) aus dem Bereich einer Weichhärte (soft temper), einer Kaltverfestigungshärte (work-hardened temper), einer natürlichen Alterungshärte (natural age aged temper) und einer künstlichen Alterungshärte (artificial aged temper).

3. Legierung nach einem der Ansprüche 1 bis 2,
**dadurch gekennzeichnet,**
**dass** sich der Mg-Gehalt im Bereich von 3,5 bis 4,5 Gewichts-% befindet.

4. Legierung nach einem der Ansprüche 1 bis 3,
**dadurch gekennzeichnet,**
**dass** sich der Kupfergehalt im Bereich bis max. 0,1 Gewichts-% befindet.

5. Legierung nach einem der Ansprüche 1 bis 4,
**dadurch gekennzeichnet,**
**dass** sich der Mn-Gehalt im Bereich von 0,4 bis 0,75 Gewichts-% befindet.

6. Schweißstruktur, die mindestens eine schweißbare Platte oder einen schweißbaren Strangpressteil aufweist, die bzw. das aus einer Aluminium-Magnesium-Legierung nach einem der Ansprüche 1 bis 5 besteht.

7. Schweißstruktur nach Anspruch 6,
**dadurch gekennzeichnet,**
**dass** die Prüfdehngrenze (proof strength) der Lötstelle der Platte oder des Strangpressteils mindestens 110 MPa beträgt.

8. Verbundstruktur, die mindestens eine Platte oder ein Strangpressteil aufweist, die bzw. das aus einer Aluminium-Magnesium-Legierung nach einem der Ansprüche 1 bis 5 besteht.

9. Verwendung einer Aluminium-Magnesium-Legierung nach einem der Ansprüche 1 bis 8 bei einer Betriebstemperatur von mehr als 80°C.

10. Verwendung einer Aluminium-Magnesium-Legierung nach einem der Ansprüche 1 bis 5 als eine Schweißfülllegierung (weld filler alloy).

## Revendications

1. Alliage d'aluminium et de magnésium sous la forme d'un produit laminé ou d'un produit extrudé, qui a la composition suivante en pourcentages en poids :
| | |
|---|---|
| Mg | >3,0-4,5 |
| Mn | 0,4-1,2 |
| Zn | 0,4-0,9 |
| Zr | 0,05-0,25 |
| Cr | 0,3 au maximum |
| Ti | 0,2 au maximum |
| V | 0,2 au maximum |
| Li | 0,5 au maximum |
| Sc | 0,5 au maximum |
| Fe | 0,5 au maximum |
| Si | 0,5 au maximum |
| Cu | 0,15 au maximum |
| Ag | 0,4 au maximum |
étant entendu que le rapport Fe/Mn est compris dans l'intervalle allant de 0,3 à 1,0 et le rapport Mg/Zn dans l'intervalle allant de 2 à 8,
autres : chacun 0,05 au maximum
total 0,15 au maximum
complément : Aluminium

2. Alliage d'aluminium et de magnésium selon la revendication 1, qui a une trempe choisie parmi une trempe douce, une trempe d'écrouissage, une trempe de vieillissement naturel et une trempe de vieillissement artificiel.

3. Alliage d'aluminium et de magnésium selon l'une quelconque des revendications 1 à 2, dont la teneur en Mg est comprise dans l'intervalle allant de 3,5 à 4,5 % en poids.

4. Alliage d'aluminium et de magnésium selon l'une quelconque des revendications 1 à 3, dont la teneur en Cu ne dépasse pas 0,1 % en poids.

5. Alliage d'aluminium et de magnésium selon l'une quelconque des revendications 1 à 4, dont la teneur en Mn est comprise dans l'intervalle allant de 0,4 à 0,75 % en poids.

6. Structure soudée comprenant au moins une plaque soudée ou une pièce extrudée soudée, en alliage d'aluminium et de magnésium selon l'une quelconque des revendications 1 à 5.

7. Structure soudée selon la revendication 6, pour laquelle la résistance d'épreuve de la soudure de ladite plaque ou pièce extrudée est d'au moins 110 MPa.

8. Structure à joint, comprenant au moins une plaque ou pièce extrudée en alliage d'aluminium et de magnésium selon l'une quelconque des revendications 1 à 5.

9. Utilisation d'un alliage d'aluminium et de magnésium selon l'une quelconque des revendications 1 à 7, à une température de travail supérieure à 80°C.

10. Utilisation d'un alliage d'aluminium et de magnésium selon l'une quelconque des revendications 1 à 5 en tant qu'alliage d'apport pour soudure.
